# EUROPEAN PATENT SPECIFICATION

(11) **EP 4 323 651 B1**
(45) Date of publication and mention of the grant of the patent: **18.06.2025**
(21) Application number: 22723819.3
(22) Date of filing: 12.04.2022
(51) Int. Cl.: F04D 25/06, F04D 25/08, F04D 29/42, F04D 29/66, H02K 5/24, F23L 5/00, F04D 29/62, F23D 14/36, F23D 14/46, F16F 15/08, F16M 13/02

(54) **VENTILATION APPARATUS**
LÜFTUNGSGERÄT
APPAREIL DE VENTILATION

(30) Priority: 16.04.2021 IT 202100009575
(43) Date of publication of application: 21.02.2024
(73) Proprietor: SIT S.P.A., 35129 Padova (IT)
(72) Inventor: PERON, Luca, 35129 Padova (IT); BARBOLINI, Bruno, 35129 Padova (IT)
(74) Representative: Petraz, Gilberto Luigi
(86) International application number: PCT/IT2022/050097
(87) International publication number: WO 2022/219662

(56) References cited:
- CN-U- 205 047 469
- DE-A1- 10 204 037
- DE-U1- 202016 103 134
- US-A1- 2015 028 179
- US-A1- 2015 152 872

## Description

### FIELD OF THE INVENTION

The present invention concerns a ventilation apparatus, preferably but not exclusively used in association with a burner for a boiler. In particular, the ventilation apparatus according to the present invention is configured to interrupt the transmission, to a spiral or volute shaped box of a fan, of the noise and vibrations generated by the rotation of the rotor of a motor connected to an impeller of the fan.

### BACKGROUND OF THE INVENTION

Ventilation apparatuses are known, for example used in association with burners for boilers, each of which comprises an electric motor and an impeller inserted in a spiral or volute shaped box, and attached to the shaft of the electric motor itself. Normally, the electric motor is mounted on the spiral shaped box or on its closing plate.

Usually a fluid, for example a mixture of air and gas coming from an external mixer, enters the spiral shaped box, for example coaxially to the axis of rotation of the impeller, and is conveyed by the latter outside the spiral shaped box, for example tangentially toward a burner.

In order to try to interrupt the transmission of the noise and vibrations generated by the rotation of the impeller made to rotate by a motor connected to it, it is known to use damping members, interposed between the electric motor and the spiral shaped box on which it is mounted.

Ventilation apparatuses are known, which use different solutions to attach the damping members to the electric motor and to the spiral shaped box. The damping members used are, for example, vibration dampers, usually made of rubber, or rubber-based materials, or materials having characteristics similar to those of rubber, such as the so-called "silent blocks", widely used commercially, which are connected to the spiral shaped box and to the electric motor by means of screws or bolts, which function as attachment members.

However, these ventilation devices have the disadvantage that they are bulky, since the threaded attachment members normally have such a length as to excessively increase the distance between the lower part of the electric motor and the spiral shaped box.

It is also known to use ventilation apparatuses that use a support plate raised above the spiral shaped box, in which the damping members are coupled with the support plate and with the external part of the electric motor, but are thus raised with respect to the spiral shaped box. Although this apparatus does allow to improve the damping of vibrations with respect to the solution described above, it still has the disadvantage of having an excessive overall size, since the raised plate keeps the motor too far distanced from the spiral shaped box.

Document DE10204037A1 describes a ventilation apparatus in which the damping members are located resting on base elements associated with a support plate and connected to the base elements by means of screws.

US2015/0028179A1 describes a vibration damping device for an electric motor, which has fastening elements and fastening seatings respectively associated with a motor support element and with a wall of a housing of the fan, disposed inclined with respect to them, with which respective damping members can be connected in the radial direction. This solution is complex in that it requires the correct alignment of the respective fastening elements and fastening seatings and, moreover, the inclined positioning of the damping members entails large overall sizes.

US2015/01582872A1 describes a fan comprising a housing, a motor and a resilient sealing element disposed between them. The fan also comprises a member that functions as a bearing, which is attached to rest elements around the drive shaft to dampen the vibrations of the latter so as to avoid excessively compressing the resilient sealing element.

Document DE202016103134U1 describes a housing device for a motor of a ventilation apparatus in which the damping members are located resting on and connected to support elements provided on a frame, which is in turn connected by means of screws to a support plate that closes the housing of the motor. This solution is also bulky and requires an additional component, namely the frame, which entails an increase in the overall sizes.

One purpose of the present invention is to provide a ventilation apparatus which has a minimum bulk, while maintaining its characteristics of damping between the electric motor and the spiral shaped box, and its characteristic of silence.

Another purpose of the invention is to guarantee a correct seal between the fan and the motor in order to prevent possible gas leaks which could be dangerous in the event that the ventilation device is used in apparatuses for feeding combustible gas.

Another purpose of the present invention is to provide a ventilation apparatus which has a reduced number of components which are simple and fast to assemble.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes, a ventilation apparatus according to the present invention comprises an electric motor, support means configured to support the electric motor and comprising a plate, and damping members interposed between the support means and the electric motor.

In accordance with the present invention, the ventilation apparatus also comprises at least first attachment elements made in a single body with the plate, protruding with respect to a flat portion of the latter, and configured to couple, in a snap-in or elastic interlocking manner, with the damping members in an axial direction.

According to the invention, the first attachment elements are conformed to be inserted into a lower hole of the damping members in such a way that a lower surface of the damping members is located resting on the flat portion.

In particular, according to some embodiments, the first attachment means are completely inserted inside the damping members.

In accordance with another aspect of the present invention, the ventilation apparatus also comprises an impeller connected, for example attached, to the shaft of the electric motor and mounted rotatable inside a spiral or volute shaped box, closed at its upper part by the plate.

In accordance with another aspect of the present invention, the first attachment elements are obtained by means of molding, pressing, or drawing of the plate.

In accordance with another aspect of the present invention, said plate comprises a continuous surface in which a single central hole is provided, through which the shaft of the electric motor passes. In this way, since a sealing packing is generally disposed around the shaft of the electric motor and no further holes or apertures are present on the plate, possible gas leaks through it are prevented, which could be dangerous in the case of applications to apparatuses for feeding combustible gases.

In accordance with another aspect of the present invention, each of the damping members comprises a tubular element of elastic material, for example substantially cylindrical, provided with at least the lower hole, which can preferably be axial. Furthermore, each of the first attachment elements comprises a central body, for example cylindrical, having substantially the same sizes as the lower hole, and an upper element with larger sizes than those of the central body, whereby each of the first attachment elements is substantially mushroom-shaped.

In particular, the first attachment elements are mushroom-shaped, with the upper part turned upside down and recessed deriving from a pressing and/or drawing process.

In accordance with another aspect of the present invention, in which each of the damping members comprises a tubular element of elastic material, provided with at least one lower hole, preferably axial, each of the first attachment elements comprises a central body, having substantially the same sizes as the lower hole, and an axial peg provided with an annular groove in which an elastic stop ring is able to be inserted.

In accordance with another aspect of the present invention, in which the shaft has its own longitudinal axis, each of the first attachment elements has a first central axis substantially parallel to the longitudinal axis.

In accordance with one aspect of the present invention, each of the first attachment elements has a first central axis inclined by a first angle with respect to the plate.

In accordance with another aspect of the present invention, the plate, in a central zone thereof, is bent circumferentially toward the impeller, in order to define a recess in which a lower part of the electric motor is housed.

In accordance with another aspect of the present invention, the ventilation apparatus also comprises second attachment elements integral with the electric motor and configured to couple, in a snap-in or interlocking manner, with the damping members on the other side with respect to the first attachment elements.

Thanks to the fact that the damping elements can couple in a snap-in manner on both sides with the first attachment elements and the second attachment elements, respectively, it is possible to considerably reduce the overall sizes, since the distance between the second attachment elements integral with the motor and the first attachment elements integral with the plate is substantially defined only by the axial length of the damping members.

In accordance with another aspect of the present invention, each of the damping members is provided with at least one upper hole, preferably axial, and each of the second attachment elements is configured to be inserted into one of the upper holes.

According to one aspect of the invention, each of the second attachment elements comprises a substantially cylindrical body, having substantially the same diameter as the upper hole of the damping member, and a lower part, for example with a substantially truncated conical or cylindrical shape, having, in the zone in contact with the body, a transverse size greater than that of the upper hole, so that the second attachment element has substantially the shape of a mushroom with the head facing in the opposite direction with respect to the first attachment elements.

In accordance with another aspect of the present invention, each of the damping members is of the bent type and comprises a lower part coaxial to the first central axis and an upper part coaxial to a second axis which is inclined by a second angle with respect to the first central axis.

### DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a schematic and exploded view of a ventilation apparatus according to the present invention in accordance with a first embodiment.
- fig. 2 is a longitudinal section view of the ventilation apparatus of fig. 1;
- fig. 3 is a section view, on an enlarged scale, of a detail of fig. 2;
- fig. 4 is a section view of the same detail of fig. 3, but in accordance with a second embodiment;
- fig. 5 is a section view of the same detail of fig. 3, but in accordance with a third embodiment;
- fig. 6 is a section view of the same detail of fig. 3, but in accordance with a fourth embodiment;
- fig. 7 is a longitudinal section view of a ventilation apparatus according to the present invention, in accordance with a fifth embodiment.

We must clarify that in the present description and in the claims the terms upper, lower and low, with their declinations, have the sole function of better illustrating the present invention with reference to the drawings and must not be in any way used to limit the scope of the invention itself, or the field of protection defined by the attached claims.

Furthermore, the people of skill in the art will recognize that certain sizes or characteristics in the drawings may have been enlarged, deformed, or shown in an unconventional or non-proportional way in order to provide a version of the present invention that is easier to understand. When sizes and/or values are specified in the following description, the sizes and/or values are provided for illustrative purposes only and must not be construed as limiting the scope of protection of the present invention, unless such sizes and/or values are present in the attached claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTS

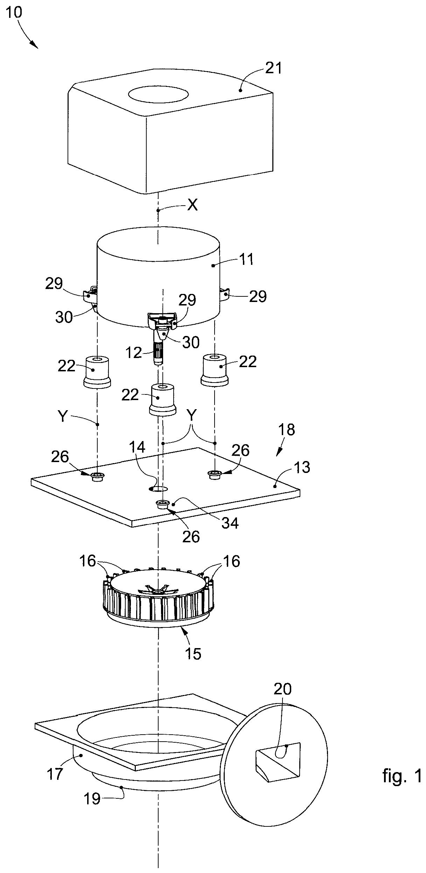

With reference to fig. 1, a ventilation apparatus 10 according to the present invention is configured to be used, preferably but not exclusively, in association with burners for boilers, of a known type and not shown in the drawings.

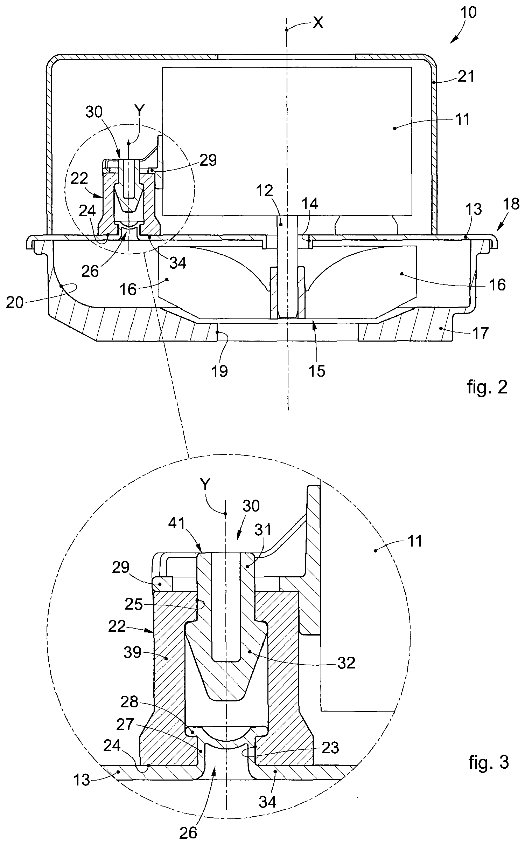

In accordance with a first embodiment, shown in figs. from 1 to 3, the ventilation apparatus 10 comprises an electric motor 11 (figs. 1 and 2), which can be of any known type whatsoever, or which will be developed in the future, for example a direct current, alternating current, or brushless motor, and support means 18 configured to support the electric motor 11.

The support means 18 comprise in particular a plate 13, preferably metallic, or in any case of a sufficiently strong and rigid material, in a way that will be described in detail below.

The electric motor 11 has a shaft 12 rotatable around its own longitudinal axis X (fig. 2), and mounted on the upper part of the plate 13.

The plate 13 is substantially perpendicular to the longitudinal axis X and is provided with a central hole 14 coaxial to the latter, through which the shaft 12 passes with clearance. An impeller 15, of a known type and provided with blades 16, is integrally attached to the lower end of the shaft 12 and is configured to move a fluid, for example a mixture of air and gas, for example in order to feed a burner for a boiler.

The impeller 15 is mounted rotatable, with clearance, inside a spiral or volute shaped box 17, closed at its upper part by the plate 13.

Preferably, the plate 13 has a continuous surface, substantially without holes or apertures except for the single central hole 14, at least in correspondence with the portion of the plate 13 that cooperates with the motor 11 and/or the impeller 15, so as to prevent possible gas leaks.

Alternative embodiments, not shown in the drawings, can provide that the spiral shaped box 17 is formed by two half-shells coupled together, and that the plate 13 constitutes the upper part of the upper half-shell.

The spiral shaped box 17 is provided with a lower suction aperture 19, coaxial to the longitudinal axis X, and with a lateral delivery aperture 20. Therefore, when the impeller 15 is made to rotate by the electric motor 11, the fluid coming, for example, from a mixer of a known type and not shown in the drawings, enters the spiral shaped box 17 from below and exits radially from the latter in order to be conveyed toward the burner for a boiler.

A protective cover 21, for example made of insulating material, is positioned around the electric motor 11.

The connection between the electric motor 11 and the plate 13 is made by means of a plurality of damping members 22, which in the example provided here are three, angularly distanced from each other with respect to the longitudinal axis X.

Each damping member 22 comprises a tubular element 39, for example substantially cylindrical, made of elastic material, such as for example rubber, or of rubber-based materials, or materials having characteristics similar to those of rubber, and having the function of interrupting the transmission of vibrations and noise produced by the rotation of the electric motor 11 and of the impeller 15. The sizes of the damping members 22 are suitably chosen on the basis of the sizes and/or other characteristics of the electric motor 11.

Each damping member 22 is provided with at least one lower axial hole 23.

Preferably, each damping member 22 is also provided with an upper axial hole 25.

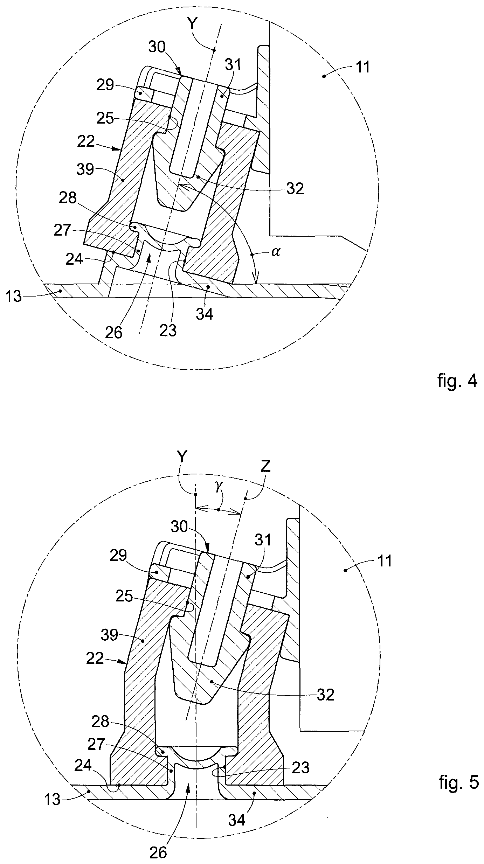

The lower 23 and/or upper 25 hole/s are coaxial to a central axis Y, which can be either parallel to the longitudinal axis X (figs. 1, 2, 3, 6 and 7), or inclined with respect to it (fig. 4), as will be described in detail below.

Each damping member 22 could also be of the bent type, as in the third embodiment shown in fig. 5 and described in detail below.

The damping members 22 are attached to the plate 13 by means of first attachment elements 26 (figs. 2 and 3), which are advantageously configured to create a snap-in or elastic interlocking coupling between the damping members 22 and the plate 13.

In particular, in accordance with the first embodiment, the first attachment elements 26 are each formed by a cylindrical body 27, having a diameter substantially equal to, or slightly greater than, the diameter of the lower axial hole 23 of the damping member 22, and by an upper part 28, substantially in the shape of a disc, with a diameter greater than that of the cylindrical body 27, so that they substantially have the shape of a mushroom.

The sizes and the ratios between the first attachment elements 26 and the damping members 22 are such as to allow their coupling and their integrality by means of an elastic deformation of the latter, thus obtaining a snap-in or elastic interlocking coupling.

The plate 13 with integrated first attachment elements 26 is obtained by means of any known method or working whatsoever, for example starting from any suitable material, such as sheet metal, aluminum, or suitable plastic materials, for example by means of molding, or pressing, whereby the first attachment elements 26 are in a single body with the plate 13.

Preferably, the first attachment elements 26 can be made by drawing or pressing the plate 13, in such a way that they are protruding with respect to a flat portion 34 of the latter.

In accordance with one aspect of the invention, the first attachment elements 26 are conformed to be inserted into the lower hole 23 of the damping members 22 in such a way that a lower surface 24 of the damping members 22 is located resting on the flat portion 34.

In accordance with another characteristic of the present invention, which can also be considered autonomous with respect to the others, the connection between the damping members 22 and the electric motor 11 can also be made by means of a snap-in or elastic interlocking coupling. For this purpose, the external part of the electric motor 11 is provided with radial fins 29, three in the example provided here, each configured to couple with a corresponding damping member 22.

A second attachment element 30 (figs. 2 and 3) is integral with the lower part of each radial fin 29 and comprises a body 31, for example substantially cylindrical, having substantially the same diameter as the upper axial hole 25 of the damping member 22, and a lower part 32, for example with a substantially truncated conical or cylindrical shape, having, in the zone in contact with the body 31, a diameter greater than that of the upper axial hole 25, so that the second attachment element 30 has substantially the shape of a mushroom with the head facing downward.

The sizes and the ratios between the second attachment elements 30 and the damping members 22 are also such as to allow their coupling and their integrality by means of an elastic deformation of the latter, thus precisely obtaining a snap-in or elastic interlocking coupling.

Therefore, by using snap-in or elastic interlocking couplings between the damping members 22 and the plate 13 on one side and/or the electric motor 11 on the other side, that is, without the use of screwable attachment elements, such as for example screws or bolts, it is possible to reduce the space between the electric motor 11 and the plate 13, that is, between the electric motor 11 and the impeller 15.

In order to reduce the space further, in accordance with a second embodiment of the present invention, shown schematically in fig. 4, the first attachment elements 26 and therefore also the central axis Y of the damping members 22 are inclined by an angle α with respect to the plate 13.

The angle α is chosen as a function of the sizes and/or other characteristics of the electric motor 11, such as for example its weight, and it is comprised preferably between 45° and 85°.

This second embodiment, in addition to reducing the overall sizes, improves the stability of the electric motor 11 with respect to the plate 13, and better counteracts any radial thrusts of the electric motor 11.

In accordance with a third embodiment, shown schematically in fig. 5, the second attachment elements 30 have an inclined shape and comprise a lower part coaxial to the central axis Y and an upper part coaxial to a second axis Z, which is inclined by a second angle γ with respect to the central axis Y.

The second angle γ is also chosen as a function of the sizes and/or other characteristics of the electric motor 11, such as for example its weight, and it is comprised preferably between 5° and 45°, so that with the third embodiment it is possible to obtain advantages similar to those obtained with the second embodiment.

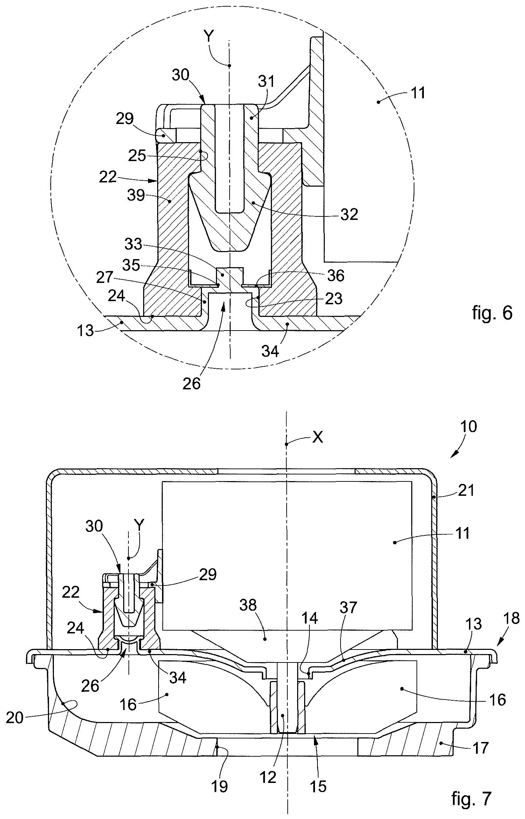

In accordance with a fourth embodiment, shown schematically in fig. 6, in place of the upper part 28 each first attachment element 26 comprises an axial peg 33 provided with an annular groove 35 in which a stop ring 36 of the elastic type is inserted, possibly in a removable way. The latter can be, for example, a Seeger ring or a Benzing ring, both known to the people of skill in the art.

The stop rings 36 also allow to create a snap-in or elastic interlocking coupling between the plate 13 and the damping members 22.

In accordance with a fifth embodiment, shown schematically in fig. 7, the plate 13, in its central zone, that is, where the central hole 14 is made, is bent toward the impeller 15 and follows the upper profile of the blades 16.

In this way, the plate 13 comprises a recess 37, in the shape of a funnel, in which a lower part 38 of the electric motor 11 is advantageously housed. This allows to further reduce the distance between the electric motor 11 and the impeller 15, so that a consequent reduction in the overall size of the ventilation apparatus 10 is achieved.

Advantageously, the ventilation apparatus 10 described heretofore allows to place the electric motor 11 in a position closer to the plate 13 and therefore to the impeller 15, compared to the solutions present in the state of the art, allowing to reduce its overall size.

Advantageously, moreover, the ventilation apparatus 10 described heretofore, thanks to the snap-in or elastic interlocking couplings between the attachment elements 26 and/or 30, and to the damping members 22, has excellent sealing, vibration damping and noise reduction characteristics.

Advantageously, moreover, the attachment elements 26 and 30 are distanced and are connected to each other only by means of the damping members 22, so that, since they are never in direct contact with each other, they do not transmit to the spiral shaped box 17 the vibrations and noise generated by the rotation of the rotor of the electric motor 11 and of the impeller 15 connected thereto.

It is clear that modifications and/or additions of parts may be made to the ventilation apparatus 10 as described heretofore, without departing from the field and scope of the present invention as defined by the claims.

It is also clear that, although the present invention has been described with reference to some specific examples, a person of skill in the art shall certainly be able to achieve many other equivalent forms of ventilation apparatus, all coming within the scope of the present invention.

In the following claims, the sole purpose of the references in brackets is to facilitate reading and they must not be considered as restrictive factors with regard to the field of protection defined by the claims.

## Claims

1. Ventilation apparatus (10), comprising an electric motor (11), support means (18) configured to support said electric motor (11) and comprising a plate (13), and damping members (22) interposed between said support means (18) and said electric motor (11), wherein said ventilation apparatus (10) also comprises at least first attachment elements (26) made in a single body with said plate (13), protruding with respect to a flat portion (34) of the latter, **characterized in that** said first attachment elements (26) are configured to couple, in a snap-in or elastic interlocking manner, with said damping members (22) in an axial direction, wherein said first attachment elements (26) are conformed to be inserted into a lower hole (23) of said damping members (22) in such a way that a lower surface (24) of said damping members (22) is located resting on said flat portion (34).

2. Ventilation apparatus (10) as in claim 1, also comprising an impeller (15) connected to a shaft (12) of said electric motor (11), **characterized in that** said impeller (15) is rotatable inside a spiral or volute shaped box (17), closed at its upper part by said plate (13).

3. Ventilation apparatus (10) as in claim 1 or 2, **characterized in that** said first attachment elements (26) are obtained by means of pressing, or drawing of said plate (13).

4. Ventilation apparatus (10) as in any claim hereinbefore, **characterized in that** said plate (13) comprises a continuous surface provided with a single central hole (14) through which a or the shaft (12) of said electric motor (11) is disposed.

5. Ventilation apparatus (10) as in any claim hereinbefore, in which each of said damping members (22) comprises a tubular element of elastic material, provided with at least said lower hole (23), **characterized in that** each of said first attachment elements (26) comprises a central body (27), having substantially the same sizes as said lower hole (23), and an upper element (28) with larger sizes than those of said central body (27).

6. Ventilation apparatus (10) as in claim 5, in which said upper element (28) has a concave shape, with the concavity facing away from the central body (27).

7. Ventilation apparatus (10) as in any claim from 1 to 4, in which each of said damping members (22) comprises a tubular element (39) of elastic material, provided with at least said lower hole (23), **characterized in that** each of said first attachment elements (26) comprises a central body (27), having substantially the same sizes as said lower hole (23) and an axial peg (33) provided with an annular groove (35) in which a stop ring (36) is able to be inserted.

8. Ventilation apparatus (10) as in claims 2 and 5 or 2 and 7, in which said shaft (12) has its own longitudinal axis (X), **characterized in that** each of said first attachment elements (26) has a first central axis (Y) substantially parallel to said longitudinal axis (X).

9. Ventilation apparatus (10) as in claims 2 and 5 or 2 and 7, **characterized in that** each of said first attachment elements (26) has a first central axis (Y) inclined by a first angle (α) with respect to said plate (13).

10. Ventilation apparatus (10) as in claim 2, **characterized in that** said plate (13), in a central zone thereof, is bent circumferentially toward said impeller (15), in order to define a recess (37) in which a lower part (38) of said electric motor (11) is housed.

11. Ventilation apparatus (10) as in any claim hereinbefore, **characterized in that** it also comprises second attachment elements (30) integral with said electric motor (11), each configured to couple axially, in a snap-in manner, with said damping members (22) on the other side with respect to said first attachment elements (26).

12. Ventilation apparatus (10) as in claim 11, **characterized in that** each of said damping members (22) is provided with an upper hole (25) and each of said second attachment elements (30) is configured to be inserted into a respective upper hole (25).

13. Ventilation apparatus (10) as in claim 12, **characterized in that** each of said second attachment elements (30) comprises a substantially cylindrical body (31), having substantially the same diameter as said upper hole (25) of said damping member (22), and a lower part (32) having, in the zone in contact with said body (31), a transverse size greater than that of said upper hole (25).

14. Ventilation apparatus (10) as in claim 8 or 9, **characterized in that** each of said damping members (22) is of the bent type and comprises a lower part coaxial to said first central axis (Y) and an upper part coaxial to a second axis (Z), which is inclined by a second angle (γ) with respect to said first central axis (Y).

## Patentansprüche

1. Lüftungsgerät (10), aufweisend einen Elektromotor (11), Stützmittel (18), die dazu eingerichtet sind, den Elektromotor (11) zu stützen und eine Platte (13) aufweisen, und Dämpfungsglieder (22), die zwischen den Stützmitteln (18) und dem Elektromotor (11) eingefügt sind, wobei das Lüftungsgerät (10) ferner zumindest erste Befestigungselemente (26) aufweist, die einstückig mit der Platte (13) ausgebildet sind, die in Bezug zu einem flachen Abschnitt (34) der letzteren hervorstehen ,
**dadurch gekennzeichnet, dass** die ersten Befestigungselemente (26) dazu eingerichtet sind, sich in einer einschnappenden oder elastisch einrastenden Weise mit den Dämpfungsgliedern (22) in einer axialen Richtung zu koppeln, wobei die ersten Befestigungselemente (26) dazu ausgestaltet sind, in ein unteres Loch (23) der Dämpfungsglieder (22) derart eingeführt zu werden, dass eine Unterseite (24) der Dämpfungsglieder (22) auf dem flachen Abschnitt (34) aufliegt.

2. Lüftungsgerät (10) gemäß Anspruch 1, ferner aufweisend einen Impeller (15), der mit einer Welle (12) des Elektromotors (11) verbunden ist, **dadurch gekennzeichnet, dass** der Impeller (15) innerhalb einer spiral- oder schneckenförmigen Box (17) rotierbar ist, die an ihrem oberen Teil durch die Platte (13) verschlossen ist.

3. Lüftungsgerät (10) gemäß Anspruch 1 oder 2, **dadurch gekennzeichnet, dass** die ersten Befestigungselemente (26) durch Pressen oder Ziehen der Platte (13) erhalten werden.

4. Lüftungsgerät (10) gemäß einem der vorstehenden Ansprüche, **dadurch gekennzeichnet, dass** die Platte (13) eine durchgehende Oberfläche aufweist, die mit einem einzigen zentralen Loch (14) versehen ist, durch das eine oder die Welle (12) des Elektromotors (11) eingeführt ist.

5. Lüftungsgerät (10) gemäß einem der vorstehenden Ansprüche, wobei jedes der Dämpfungsglieder (22) ein rohrförmiges Element aus elastischem Material aufweist, das mit zumindest dem unteren Loch (23) versehen ist, **dadurch gekennzeichnet, dass** jedes der ersten Befestigungselemente (26) einen zentralen Körper (27), der im Wesentlichen die gleichen Abmessungen wie das untere Loch (23) hat, und ein oberes Element (28) mit größeren Abmessungen als die des zentralen Körpers (27) aufweist.

6. Lüftungsgerät (10) gemäß Anspruch 5, wobei das obere Element (28) eine konkave Form hat, wobei die Konkavität von dem zentralen Körper (27) abgewandt ist.

7. Lüftungsgerät (10) gemäß einem der Ansprüche 1 bis 4, wobei jedes der Dämpfungsglieder (22) ein rohrförmiges Element (39) aus elastischem Material aufweist, das mit zumindest dem unteren Loch (23) versehen ist, **dadurch gekennzeichnet, dass** jedes der ersten Befestigungselemente (26) einen zentralen Körper (27), der im Wesentlichen die gleichen Abmessungen wie das untere Loch (23) hat, und einen axialen Stift (33), der mit einer ringförmigen Nut (35) versehen ist, in die ein Anschlagring (36) einsetzbar ist, aufweist.

8. Lüftungsgerät (10) gemäß einem der Ansprüche 2 und 5 oder 2 und 7, wobei die Welle (12) seine eigene Längsachse (X) hat, **dadurch gekennzeichnet, dass** jedes der ersten Befestigungselemente (26) eine, im Wesentlichen parallel zu der Längsachse (X), erste Mittelachse (Y) hat.

9. Lüftungsgerät (10) gemäß einem der Ansprüche 2 und 5 oder 2 und 7, **dadurch gekennzeichnet, dass** jedes der ersten Befestigungselemente (26) eine erste Mittelachse (Y), die in Bezug zu der Platte (13) um einen ersten Winkel (α) geneigt ist, hat.

10. Lüftungsgerät (10) gemäß Anspruch 2, **dadurch gekennzeichnet, dass** die Platte (13) in einer zentralen Zone umlaufend in Richtung des Impellers (15) gebogen ist, um eine Vertiefung (37) zu definieren, in der ein unterer Teil (38) des Elektromotors (11) aufgenommen ist.

11. Lüftungsgerät (10) gemäß einem der vorstehenden Ansprüche, **dadurch gekennzeichnet, dass** es ferner zweite Befestigungselemente (30) integral mit dem Elektromotor (11) aufweist, die jeweils dazu ausgebildet sind, sich axial in einer einschnappenden Weise mit den Dämpfungsgliedern (22) auf der anderen Seite, in Bezug zu den ersten Befestigungselementen (26), zu koppeln.

12. Lüftungsgerät (10) gemäß Anspruch 11, **dadurch gekennzeichnet, dass** jedes der Dämpfungsglieder (22) mit einem oberen Loch (25) versehen ist und jedes der zweiten Befestigungselemente (30) dazu ausgebildet ist, in ein entsprechendes oberes Loch (25) eingeführt zu werden.

13. Lüftungsgerät (10) gemäß Anspruch 12, **dadurch gekennzeichnet, dass** jedes der zweiten Befestigungselemente (30) einen im Wesentlichen zylindrischen Körper (31), der im Wesentlichen den gleichen Durchmesser wie das obere Loch (25) des Dämpfungsglieds (22) hat, und einen unteren Teil (32), der in der Zone in Kontakt mit dem Körper (31) eine größere Querabmessung als das obere Loch (25) hat, aufweist.

14. Lüftungsgerät (10) gemäß Anspruch 8 oder 9, **dadurch gekennzeichnet, dass** jedes der Dämpfungsglieder (22) von dem gebogenen Typ ist und ein unterer Teil, koaxial zu der ersten Mittelachse (Y), und ein oberer Teil koaxial zu einer zweiten Achse (Z), die in Bezug zu der ersten Mittelachse (Y) um einen zweiten Winkel (γ) geneigt ist, aufweist.

## Revendications

1. Appareil de ventilation (10), comprenant un moteur électrique (11), des moyens de support (18) configurés pour supporter ledit moteur électrique (11) et comprenant une plaque (13), et des éléments d'amortissement (22) interposés entre lesdits moyens de support (18) et ledit moteur électrique (11), dans lequel ledit appareil de ventilation (10) comprend également au moins des premiers éléments de fixation (26) réalisés en un seul corps avec ladite plaque (13), faisant saillie par rapport à une partie plate (34) de cette dernière, **caractérisé en ce que** lesdits premiers éléments de fixation (26) sont conçus pour s'accoupler, par encliquetage ou inter-verrouillage élastique, auxdits éléments d'amortissement (22) dans une direction axiale, dans lequel lesdits premiers éléments de fixation (26) sont conformés pour être insérés dans un trou inférieur (23) desdits éléments d'amortissement (22) de telle manière qu'une surface inférieure (24) desdits éléments d'amortissement (22) est située reposant sur ladite partie plate (34).

2. Appareil de ventilation (10) selon la revendication 1, comprenant également une roue à aubes (15) reliée à un arbre (12) dudit moteur électrique (11), **caractérisé en ce que** ladite roue à aubes (15) peut tourner à l'intérieur d'un boîtier en forme de spirale ou de volute (17), fermé au niveau de sa partie supérieure par ladite plaque (13).

3. Appareil de ventilation (10) selon la revendication 1 ou 2, **caractérisé en ce que** lesdits premiers éléments de fixation (26) sont obtenus par pression, ou étirage de ladite plaque (13).

4. Appareil de ventilation (10) selon une quelconque revendication précédente, **caractérisé en ce que** ladite plaque (13) comprend une surface continue dotée d'un unique trou central (14) à travers lequel un/l'arbre (12) dudit moteur électrique (11) est disposé.

5. Appareil de ventilation (10) selon une quelconque revendication précédente, dans lequel chacun desdits éléments d'amortissement (22) comprend un élément tubulaire de matériau élastique, doté d'au moins ledit trou inférieur (23), **caractérisé en ce que** chacun desdits premiers éléments de fixation (26) comprend un corps central (27), présentant sensiblement les mêmes tailles que ledit trou inférieur (23), et un élément supérieur (28) avec des tailles plus grandes que celles dudit corps central (27).

6. Appareil de ventilation (10) selon la revendication 5, dans lequel ledit élément supérieur (28) présente une forme concave, la concavité étant opposée au corps central (27).

7. Appareil de ventilation (10) selon une quelconque revendication 1 à 4, dans lequel chacun desdits éléments d'amortissement (22) comprend un élément tubulaire (39) de matériau élastique, doté d'au moins ledit trou inférieur (23), **caractérisé en ce que** chacun desdits premiers éléments de fixation (26) comprend un corps central (27), présentant sensiblement les mêmes tailles que ledit trou inférieur (23) et une cheville axiale (33) dotée d'une rainure annulaire (35) dans laquelle un anneau de butée (36) peut être inséré.

8. Appareil de ventilation (10) selon les revendications 2 et 5 ou 2 et 7, dans lequel ledit arbre (12) présente son propre axe longitudinal (X), **caractérisé en ce que** chacun desdits premiers éléments de fixation (26) présente un premier axe central (Y) sensiblement parallèle audit axe longitudinal (X).

9. Appareil de ventilation (10) selon les revendications 2 et 5 ou 2 et 7, **caractérisé en ce que** chacun desdits premiers éléments de fixation (26) présente un premier axe central (Y) incliné d'un premier angle (α) par rapport à ladite plaque (13).

10. Appareil de ventilation (10) selon la revendication 2, **caractérisé en ce que** ladite plaque (13), dans une zone centrale de celle-ci, est courbée de manière circonférentielle en direction de ladite roue à aubes (15), afin de définir un évidement (37) dans lequel une partie inférieure (38) dudit moteur électrique (11) est logée.

11. Appareil de ventilation (10) selon une quelconque revendication précédente, **caractérisé en ce qu'**il comprend également des seconds éléments de fixation (30) intégrés audit moteur électrique (11), conçus chacun pour s'accoupler axialement, par encliquetage, auxdits éléments d'amortissement (22) de l'autre côté par rapport auxdits premiers éléments de fixation (26).

12. Appareil de ventilation (10) selon la revendication 11, **caractérisé en ce que** chacun desdits éléments d'amortissement (22) est doté d'un trou supérieur (25) et chacun desdits seconds éléments de fixation (30) est conçu pour être inséré dans un trou supérieur respectif (25).

13. Appareil de ventilation (10) selon la revendication 12, **caractérisé en ce que** chacun desdits seconds éléments de fixation (30) comprend un corps sensiblement cylindrique (31), présentant sensiblement le même diamètre que ledit trou supérieur (25) dudit élément d'amortissement (22), et une partie inférieure (32) présentant, dans la zone en contact avec ledit corps (31), une taille transversale supérieure à celle dudit trou supérieur (25).

14. Appareil de ventilation (10) selon la revendication 8 ou 9, **caractérisé en ce que** chacun desdits éléments d'amortissement (22) est du type courbé et comprend une partie inférieure coaxiale audit premier axe central (Y) et une partie supérieure coaxiale à un second axe (Z), qui est incliné d'un second angle (γ) par rapport audit premier axe central (Y).
